# EUROPEAN PATENT APPLICATION

(11) **EP 2 343 918 A2**
(43) Date of publication of application: **13.07.2011**
(21) Application number: 11275009.6
(22) Date of filing: 12.01.2011
(51) Int. Cl.: H04W 36/00

(54) **Circuit switched fallback**

(30) Priority: 12.01.2010 GB 1000456
(71) Applicant: Vodafone Intellectual Property Licensing Limited, Newbury, Berkshire RG14 2FN (GB); Vodafone IP Licensing limited, The Connection Newbury Berkshire RG14 2FN (GB)
(72) Inventor: Patanapongpibul, Leo, Weybridge, Surrey KT13 8JU (GB); Golaup, Assen, Hounslow, Middlesex TW3 2PJ (GB); Pudney, Christopher, Newbury, Berkshire RG20 9EZ (GB)
(74) Representative: Ellis, Lyle John

(57) **Abstract**

A method for performing Circuit Switched Fallback of a radio access terminal in a multi-RAT network environment comprised of a packet switched network and one or more circuit switched networks, each of said networks including a plurality of cells and the radio access terminal camping on a serving cell in the packet switched cellular network, the method comprising; receiving a service indication for a circuit switched service; transmitting to the radio access terminal a message to release the radio connection in the packed switched network; wherein the message to release the radio connection from the packet switched network comprises: data identifying one or more carrier frequencies associated with one or more of the circuit switched cellular networks; and system information data of a plurality of cells associated with one or more of the circuit switched cellular networks to the radio access terminal; releasing the radio access terminal from the packet switched cellular network; and in the radio access terminal, using the one or more carrier frequencies and the system information data of a plurality of cells to access a cell of the one or more circuit switched networks.

## Description

The present invention relates to method for performing Circuit Switched Fallback of a radio access terminal in a multi-RAT network environment.

### Background

Mobile Circuit Switched (CS) services supported by on GSM/EDGE Radio Access Network (GERAN) and Universal Terrestrial Radio Access Network (UTRAN) are used throughout the world. They allow a user to obtain telecommunication services with a single user subscription in many countries around the world. The number of CS subscribers continues to grow rapidly, boosted by the expansion of mobile CS services in countries with high populations such as India and China.

A Third Generation Partnership Project (3GPP) work item, "Evolved UTRA and UTRAN", defines Long-Term Evolution (LTE), designed to improve efficiency, lower costs and improve services for 3GPP-based access technology. LTE uses Orthogonal Frequency-Division Multiplexing (OFDM) radio technology in the downlink and Single Carrier Frequency Division Multiple Access (SC-FDMA) for the uplink, allowing at least 100 Mbps peak data rate for downlink data rate and 50 Mbps for uplink data rate.

In addition to the Radio Access Network (RAN) standardization, a 3GPP System Architecture Evolution (SAE) work item has been to develop an evolved core network (CN) for LTE networks. The SAE core network is made up of core nodes, which may be further split into Control Plane (Mobility Management Entity, MME) nodes and User Plane Gateway (Serving Gateway and PDN Gateway) nodes.

LTE and SAE only support PS data transport, and so all services must be supported via a PS domain. However, existing GERAN and UTRAN provide both PS and CS access and services, and so for telephony services to be deployed over LTE radio access, an IMS-based service engine is required. There are several interim solutions to allow LTE/SAE access to CS domain services normally available via GERAN and UTRAN but these require the network to either support "CS over SAIE/LTE" or sending the UE to one of the CS supporting Radio Access Technology (RAT). The solution focused in this invention is the later, specifically, the Circuit Switched Fallback solution

### Circuit Switched Fallback (CSFB)

CSFB is a technique which allows the User Equipment (UE), sometimes referred to as a "mobile" or "terminal" in this document, normally camped on LTE for Packet Switched (PS) services to make a Circuit Switched (CS) type call on a CS supporting Radio Access Technology (e.g. UTRAN or GERAN) providing overlaying coverage to the UE.

The eNodeB can use different methods to transfer the call from LTE to a CS supporting RAT. For CSFB to GERAN or UTRAN supported techniques in 3GPP include:
1) PS Handover (applicable to both UTRAN and GERAN)
2) Cell Change Order (CCO) with/without Network Assisted Cell Change (NACC) (only applicable for GERAN)
3) Release with Redirection with redirected carrier information (applicable to both UTRAN and GERAN)

The main discriminating factors between the different options for CSFB include the complexity of implementation and more importantly, the delay incurred in using the procedure. The call setup delay is a vital indication of network performance. The invention aims to reduce the call setup delay for a CSFB call based on the RRC Connection Release with Redirection procedure.

It is an object of the invention to reduce the time delay between a mobile device being released by an LTE network and accessing the cell on a CS capable network.

Another object of the invention is to introduce a CSFB procedure which does not require extensive planning effort from the operator whilst being able to reduce the overall CSFB call setup delay.

In accordance with one aspect of the present invention, there is provided a method for performing Circuit Switched Fallback of a radio access terminal in a multi-RAT network environment comprised of a packet switched network and one or more circuit switched networks, each of said networks including a plurality of cells and the radio access terminal camping on a serving cell in the packet switched cellular network, the method comprising; receiving a service indication for a circuit switched service; transmitting to the radio access terminal a message to release the radio connection in the packed switched network; wherein the message to release the radio connection from the packet switched network comprises: data identifying one or more carrier frequencies associated with one or more of the circuit switched cellular networks; and system information data of a plurality of cells associated with one or more of the circuit switched cellular networks to the radio access terminal; releasing the radio access terminal from the packet switched cellular network; and in the radio access terminal, using the one or more carrier frequencies and the system information data of a plurality of cells to access a cell of the one or more circuit switched networks.

The cell of the one or more circuit switched networks is preferably accessed without the need for the radio access terminal to read the system information from the cell. Since the radio access terminal contains all the information it requires to access the circuit switched network there is advantageously no need to read the system information from the cell to be accessed.

The first RAT network typically does not support a circuit switched mode of operation, which is why the radio access terminal needs to fallback to a circuit switched network.

Preferably the one or more carrier frequencies comprise a set of absolute radio-frequency channel numbers (ARFCNs). In the prior art the UE would need to retrieve this information directly from the circuit switched network, which typically has much slower data transfer rates and therefore requires more time to retrieve.

The set of absolute radio-frequency channel numbers (ARFCNs) may be GERAN broadcast control channel (BCCH) carrier frequencies, the cell can be identified by its Network Colour Code, Base Station Colour Code (the GERAN physical cell identity) and the BCCH carrier frequency. The GERAN system information preferably comprises one or more of the following minimum information: system information type 1 (SI1), system information type 2 (SI3) and system information type 13 (SI13).

Alternatively, the set of absolute radio-frequency channel numbers (ARFCNs) may be for a UTRAN, where the UTRAN cell is identified by the UTRAN physical cell identity.

The radio access terminal is preferably provided with a list of cell identities for a plurality of cells of the one or more circuit switched networks and the respective system information related to each of the physical cell identities.

The system information data preferably comprises information to permit the radio access terminal to make immediate access to the one of the plurality of cells of the one or more circuit switched networks after the step of releasing the radio access terminal from the packet switched network and selecting the said cell.

For a better understanding of the present invention, reference will now be made, by way of example only, to the accompanying drawings in which:
Figure 1 is a message flow diagram of the prior art CSFB procedure with illustration of expected delays for CSFB to GERAN;
Figure 2 is a flowchart illustrating UE behaviour depending on whether carrier information for target RAT and/or system information for cells of the target RAT is provided; and
Figure 3 is a message flow diagram illustrating the additional information provided in RRC Connection Release for the case of CS Fallback to GERAN or UTRAN according to an embodiment of the invention , showing the foreseen reduction in call setup delay for each RAT.

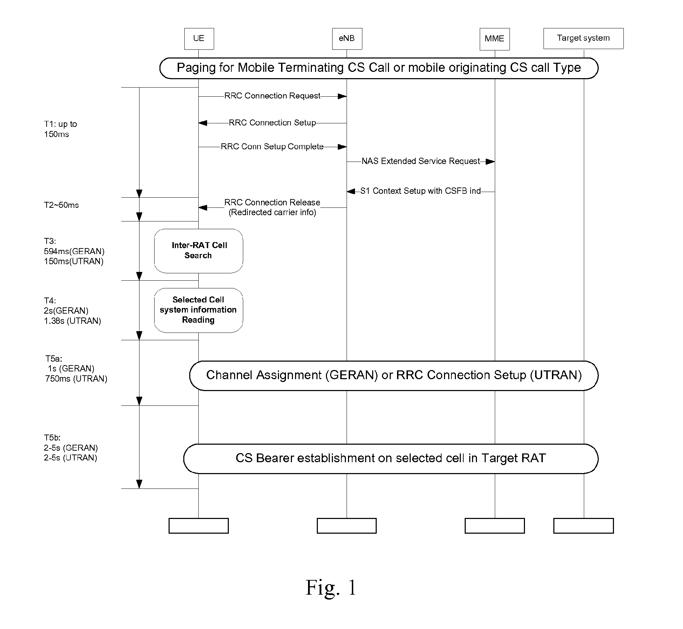

The following is a description of the 3GPP Release 8 procedure for CSFB based on RRC Connection Release with Redirection. The basic procedure for CSFB consists of the following steps:
1. While the UE is camped on to an LTE cell and in the case of a mobile terminated (MT) call, the UE is first sent a paging message by the LTE Mobility Management Entity (MME) indicating CS paging. The UE then sends an Extended Service Request message (a Non-Access Stratum message) to the MME with a 'CSFB indicator'. In the case of a mobile originated (MO) call while the UE is in LTE, the UE sends the Extended Service Request message to the MME with a 'CSFB indicator'.
2. In order to send this Non-Access Stratum (NAS) message to the MME, the UE first establishes a Radio Resource Control (RRC) connection as illustrated in Figure 1 by sending a RRC Connection Request to the LTE eNodeB. The eNodeB responds to this message with an RRC Connection Setup message. The NAS Extended Service Request message is included in the next message sent by the UE: the RRC Connection Setup Complete message. The eNB forwards the NAS Extended Service Request message transparently to the MME over an S1 connection. In response to this message, the MME sends an S1 AP message to the eNodeB containing the 'CSFB indicator'. The whole procedure may take up to around 150ms [T1].
   As illustrated in Figure 1, the eNodeB sends an RRC Connection Release message to the UE with information about the carrier frequency(ies) on which it should preferentially search for a suitable cell. On receiving this message, the UE releases the established RRC Connection in LTE and goes to RRC IDLE mode. This RRC Connection Release procedure can take up to 50ms [T2].
   Once in RRC IDLE mode, the UE tunes its radio to the target RAT. For GERAN, UE searches for all of the GERAN Broadcast Control Channel (BCCH) carrier frequencies provided in the LTE RRC Connection Release message. If the list of BCCH carrier frequencies was not provided, the UE can take up to 594 ms [T3] to locate a GERAN cell.
   Before the UE can access any chosen cell of the CS supporting RAT, it has to acquire the cell's system information. Taking GERAN as an example RAT again, a crude mobile implementation would have to read the "full BCCH" taking eight 51 frame multiframes (=1880 ms) while a more-sophisticated non-DTM mobile would only need SI 3 and SI 1 (probably incurring a uniform random delay of about 2 to 8 multiframes, e.g. an average of about 1185ms (Assuming that SI13 is sent in on the BCCH and SI 1 is only sent once every 8 multiframes).The time taken in acquiring the GERAN System Information is therefore a significant contribution to the CSFB delay and can take up to 2 seconds [T4].
3. Once the UE has camped on a suitable cell of the target RAT, it will then request for a channel assignment (GERAN) or set up an RRC Connection (UTRAN). For GERAN this can take up to 1 second and for UTRAN this can take up to 750ms [T5a] . The UE will then initiate the CS call setup procedure with an additional delay between 2 to 5 seconds [T5b].

Hence, the overall call setup delay for a CSFB call can be as high as 8.75s with up to 2s required for the UE to acquire the target cell system information in GERAN.

For the UTRAN case, the overall call set up delay for a CSFB call can be up to 7.45s with up to 1.4s required for the UE to acquire the target cell system information.

As described above, one of the main delay components with the CSFB procedure using RRC Connection Release with redirection is the time the UE takes to acquire the target cell system information. The extra delay can be up to 2 seconds for GERAN and 1.4s for UTRAN. Considering that delay for the call setup in the target RAT system is already high, the extra delay for reading the system information of the target cell will increase the overall call setup delay to a value which is detrimental to the user experience.

### Problem with Inter-RAT Cell Change Order to GERAN with Network Assisted Cell Change

The Cell Change order (CCO) procedure with Network Assisted Cell Change (NACC) is an alternative to the RRC Connection Release with Redirection procedure used for CSFB. The main difference between the two procedures is that the UE is moved to the target RAT whilst in RRC Connected Mode. In the context of CSFB, the procedure is triggered by the eNodeB when it receives the CFSB indicator in the S1 context setup message. Unlike RRC Connection Release with redirection, the command can only be initiated after security has been established over the radio interface.

The CCO procedure with NACC assumes that eNodeB is aware of the target cell on the CS supporting RAT that the UE needs to be sent. This can be achieved by the mobile identifying the strongest cell and reporting its identity to the eNodeB e.g. BSIC +ARFCN for GERAN. This takes time, e.g. requiring signal strength measurements to be averaged for 1000 ms. Alternatively, the target cell can be chosen based on Operations and Maintenance (O&M) planning. It is also required that the eNodeB acquires the system information for the chosen target cell.

The eNodeB sends the CCO command to the UE to access the indicated cell with the provided system information. The UE is expected to access the chosen cell using the provided system information.

The main drawback with the CCO procedure is that it assumes the eNodeB knows precisely the target GERAN cell which UE should access. This is unlikely to be achieved without considerable planning effort from the operator (e.g. in early LTE deployments). The alternative is for the eNodeB to do measurements before initiating CCO but that would add significant delay to the procedure.

### CSFB based on RRC Connection Release with System Information

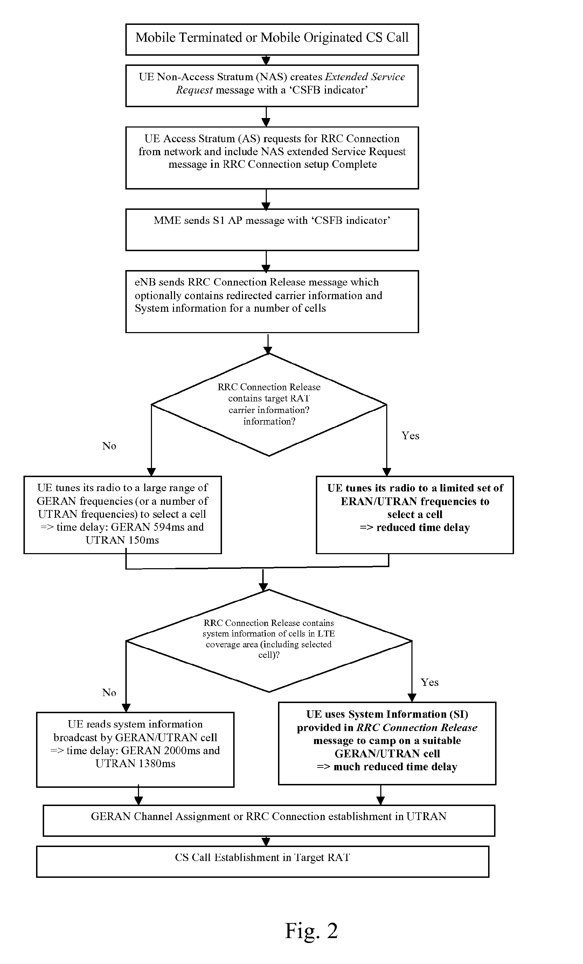

The current invention sends the system information of multiple target cells of the CS supporting RAT to the UE in the RRC Connection Release message, in addition to the information on the carrier information. Figure 2 illustrates the UE behaviour depending on whether carrier information and system information of cells in the LTE coverage area are provided for the target RAT.

According to an embodiment of the invention, the UE enters RRC Idle mode on receiving the RRC Connection Release message. Hence, the UE is able to choose a suitable cell in the target CS supporting RAT from the carrier frequency list provided in the RRC Connection Release message. This cell does not have to be the strongest cell. By exploiting the received system information of multiple cells from the eNodeB, the UE can prioritise the search for cells for which system information has been provided.

The current invention relieves the limitations of CCO and 3GPP Release 8 RRC Connection Release procedures. With respect to the CCO procedure, there is no need for accurate planning if the operator can provide system information for a set of cells from the CS supporting RAT covering the LTE coverage area rather than one cell from the CS supporting RAT. With respect to the RRC Connection Release procedure, the UE does not need to acquire the system information of the selected target cell before accessing it which significantly reduces the call setup delay.

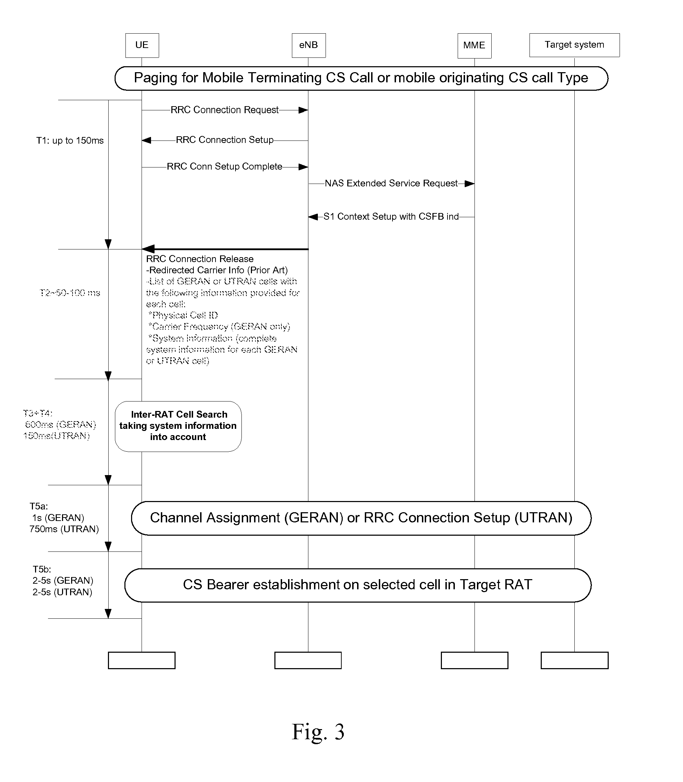

Figure 3 illustrates the additional information which is provided for GERAN according to an embodiment of the present invention and how the overall call setup delay is affected. It is noted that the time to send the RRC Connection Release message with system information of multiple cells can potentially increase if the data is sent in several transport blocks (depending on the LTE system bandwidth). However, the increase is likely to be much less than the time required to acquire system information of the target cell.

## Claims

1. A method for performing Circuit Switched Fallback of a radio access terminal in a multi-RAT network environment comprised of a packet switched network and one or more circuit switched networks, each of said networks including a plurality of cells and the radio access terminal camping on a serving cell in the packet switched cellular network, the method comprising;
receiving a service indication for a circuit switched service;
transmitting to the radio access terminal a message to release the radio connection in the packed switched network;
wherein the message to release the radio connection from the packet switched network comprises:
data identifying one or more carrier frequencies associated with one or more of the circuit switched cellular networks; and
system information data of a plurality of cells associated with one or more of the circuit switched cellular networks to the radio access terminal;
releasing the radio access terminal from the packet switched cellular network; and
in the radio access terminal, using the one or more carrier frequencies and the system information data of a plurality of cells to access a cell of the one or more circuit switched networks

2. A method according to claim 1 wherein the cell of the one or more circuit switched networks is accessed without the need for the radio access terminal to read the system information from the cell.

3. A method according to claim 1 or 2 wherein the first RAT network does not support a circuit switched mode of operation.

4. A method according to claim 1, 2 or 3 wherein the one or more carrier frequencies comprise a set of absolute radio-frequency channel numbers (ARFCNs).

5. A method according to claim 4 wherein the set of absolute radio-frequency channel numbers (ARFCNs) are GERAN broadcast control channel (BCCH) carrier frequencies.

6. A method according to claim 5 wherein the GERAN cell is identified by its Network Colour Code, Base Station Colour Code (the GERAN physical cell identity) and the BCCH carrier frequency.

7. A method according to claim 4 or 5 wherein the GERAN system information comprises one or more of the following minimum information: system information type 1 (SI1), system information type 2 (SI3) and system information type 13 (SI13) .

8. A method according to claim 4 wherein the set of absolute radio-frequency channel numbers (ARFCNs) are for a UTRAN.

9. A method according to claim 8 wherein the UTRAN cell is identified by the UTRAN physical cell identity.

10. A method according to any preceding claim wherein the radio access terminal is provided with a list of cell identities for a plurality of cells of the one or more circuit switched networks and the respective system information related to each of the physical cell identities.

11. A method according to any preceding claim where in the system information data comprises information to permit the radio access terminal to make immediate access to the one of the plurality of cells of the one or more circuit switched networks after the step of releasing the radio access terminal from the packet switched network and selecting the said cell.
